Europäisches Patentamt

(19) European Patent Office

Office européen des brevets

(11) Veröffentlichungsnummer: **0 044 460**
**B1**

(12) **EUROPÄISCHE PATENTSCHRIFT**

(45) Veröffentlichungstag der Patentschrift:
09.05.84

(51) Int. Cl.³: **C 08 G 18/10,** C 08 G 18/08,
C 08 G 18/48, C 08 J 3/06

(21) Anmeldenummer: 81105236.4

(22) Anmeldetag: 06.07.81

(54) **Feste, in Wasser dispergierbare, Isocyanatgruppen aufweisende Kunststoffvorläufer und Verfahren zur Herstellung von wässrigen Kunststoffdispersionen unter Verwendung dieser Kunststoffvorläufer.**

(30) Priorität: 18.07.80 DE 3027198

(43) Veröffentlichungstag der Anmeldung:
27.01.82 Patentblatt 82/4

(45) Bekanntmachung des Hinweises auf die Patenterteilung:
09.05.84 Patentblatt 84/19

(84) Benannte Vertragsstaaten:
AT BE CH DE FR GB IT LI NL SE

(56) Entgegenhaltungen:
FR - A - 1 521 170
FR - A - 2 325 668
FR - A - 2 364 934
FR - A - 2 370 761

Die Akte enthält technische Angaben, die nach dem Eingang der Anmeldung eingereicht wurden und die nicht in dieser Patentschrift enthalten sind.

(73) Patentinhaber: BAYER AG, Konzernverwaltung RP Patentabteilung, D-5090 Leverkusen 1 Bayerwerk (DE)

(72) Erfinder: Wenzel, Wolfgang, Dr.,
Peter-Landwehr-Strasse 13,
D-5060 Bergisch-Gladbach 2 (DE)
Erfinder: Dieterich, Dieter, Dr., Ludwig-Girtler-Strasse 1,
D-5090 Leverkusen 1 (DE)

## Beschreibung

Die vorliegende Erfindung betrifft neue, unterhalb 40°C feste, in Wasser dispergierbare Kunststoffvorläufer, ein Verfahren zur Herstellung von stabilen, wässerigen Kunststoffdispersionen, insbesondere wässerigen Polyurethan-Polyharnstoff-Dispersionen, sowie die Verwendung der Kunststoffvorläufer als Vernetzungsmittel für in Wasser dispergierte Kunststoffe.

Verfahren zur Herstellung von stabilen, wässerigen Polyurethan-Polyharnstoff-Dispersionen sind bekannt (z.B. DBP Nr. 1184946, DBP Nr. 1178586, DAS Nr. 1237306, DOS Nr. 1495745, DOS Nr. 1595602, DOS Nr. 1770068, DOS Nr. 2019324, DOS Nr. 2314512, DOS Nr. 2446440, DOS Nr. 2811148, vgl. auch D. Dieterich et al., „Angew. Chem.", 82, 53 [1970]). Die beschriebenen Dispersionen beruhen auf dem Prinzip, in eine makromolekulare Kette eines Polyurethan-(Polyharnstoff-)Moleküls hydrophile Zentren einzubauen. Diese hydrophilen Zentren oder sogenannten inneren Emulgatoren sind in den bekannten Dispersionen ionische Gruppen oder Etherfunktionen. Die Gruppen werden entweder in das Präpolymer eingebaut oder als modifizierte Amine zur Kettenverlängerung der Präpolymeren eingesetzt, die je mindestens zwei endständige NCO-Funktionen besitzen.

Zur Herstellung der bisher bekannten Dispersionen kann man sich verschiedener Verfahren bedienen, die z.B. von D. Dieterich und H. Reiff in „Angew. makromol. Chemie", 26, 85 (1972) beschrieben sind. Im allgemeinen wird entweder die Lösung eines Polyurethans in einem organischen Lösungsmittel in eine wässerige Dispersion übergeführt oder es wird eine Präpolymerstufe mit oder ohne Lösungsmittel in flüssiger Form in Wasser dispergiert. Man kann beispielsweise ein flüssiges NCO-Gruppen aufweisendes Präpolymerionomer unter kräftigem Rühren in Wasser eintragen, wobei zunächst eine Emulsion des Präpolymeren entsteht, die durch Kettenverlängerung mit Wasser oder einem Di- oder Polyamin zum hochmolekularen Polyurethanharnstoff weiterreagiert. So werden beispielsweise gemäss der vorveröffentlichen FR-A Nr. 2370761 flüssige NCO-Präpolymere unter Verwendung von Supratonmaschinen in Wasser dispergiert.

Eine besonders einfach durchzuführende Dispergiermethode wurde in der deutschen Offenlegungsschrift Nr. 1913271 (bzw. US-Patent Nr. 3756992) beschrieben. Danach wird ein zur Addition von Formaldehyd unter Bildung von Methylolgruppen befähigter fester oder flüssiger Polyurethanpolyelektrolyt durch Vermischen mit Wasser dispergiert und durch Zugabe von Formaldehyd bzw. Formaldehydderivaten in einen Methylolgruppen aufweisenden Polyurethanpolyelektrolyten überführt. Dieser wird in der Dispersion oder auch auf einem Substrat zum hochmolekularen Polyutethan auskondensiert.

Zur Dispergierung wird der rührbaren Schmelze so lange Wasser zugesetzt, bis das Wasser die kontinuierliche Phase bildet, wobei im allgemeinen zunächst die Stufe einer W/O-Emulsion durchlaufen wird. Man kann auch bei erhöhter Temperatur eine W/O-Emulsion herstellen, die beim abkühlen in eine O/W-Emulsion übergeht. Die Herstellung der Dispersion wird praktisch immer bei erhöhter Temperatur, vorzugsweise zwischen 50 und 120°C durchgeführt. Dies ist notwendig, einmal weil die zu dispergierende Präpolymerstufe bei Raumtemperatur eine zu hohe Viskosität aufweist und daher zur Dispergierung aufwendige Apparate, wie Schneckenmaschinen erforderlich wären, zum anderen auch deshalb, weil der Dispergiervorgang im allgemeinen um so rascher verläuft, je höher die angewandte Temperatur ist. Auch die Dispergierung lösungsmittelfreier Schmelzen von NCO-Präpolymeren wird praktisch stets bei erhöhter Temperatur vorgenommen, wobei das Restisocyanat mit Wasser und/oder zugesetztem Amin abreagiert.

Übliche Ionomerdispersionen wiesen im allgemeinen ungenügende Froststabilität auf, wodurch Lagerung und Versand in der kalten Jahreszeit kostspielig werden, weil geheizte Lagerräume benötigt werden. Abgesehen davon ist der Transport wässeriger Dispersionen über grössere Entfernungen grundsätzlich unbefriedigend, weil grosse Wassermengen aufwendig transportiert werden müssen.

In den US-Patentschriften Nr. 4094842 und Nr. 4123423 wird eine Möglichkeit aufgezeigt, die wässrigen Dispersionen durch Spontandispergierungen NCO-freier Feststoffe in Wasser und Zugabe gegebenenfalls notwendiger Vernetzungszusätze beim Anwender herzustellen. Die nach der Verfahren dieser Veröffentlichungen hergestellten Polymere, insbesondere Polyurethane, liegen als vorwiegend vernetzte Produkte vor. Wünschenswert wäre es jedoch, auf vergleichbarem Wege vorwiegend lineare Produkte herzustellen, die für viele Anwendungen auf Grund ihres höheren Qualitätsniveaus geeigneter sind. Doch sollten auch diese Produkte in fester Form versandt werden, und erst beim Anwender zu einer wässerigen Lösung oder Dispersion verarbeitet werden, um diesen ökonomischen Vorteil voll zu nutzen.

Überraschenderweise wurde nunmehr gefunden, dass bestimmte, nachstehend näher beschriebene NCO-Gruppen aufweisende Kunststoffvorläufer bei Temperaturen unterhalb ihres Erweichungsbereichs bei Berührung mit Wasser spontan in eine stabile Dispersion übergehen, die im Anschluss an ihre Dispergierung mit geeigneten Kettenverlängerungsmitteln bzw. Vernetzungsmitteln zu hochmolekularen Kunststoffen umgesetzt werden können. Es ist somit möglich, diese Kunststoffvorläufer in stückiger oder (grob)-pulvriger Form in Wasser einzutragen oder mit Wasser zu übergiessen und so zu Dispersionen quasi zu lösen, wobei die reaktiven NCO-Gruppen im wesentlichen erhalten bleiben.

Diese Eigenschaften der nachstehend beschriebenen erfindungsgemässen Kunststoffvorläufer sind überraschend, da Isocyanatgruppen im allgemeinen sehr reaktiv gegenüber Wasser sind, insbe-

sondere dann, wenn das Isocyanat in einer zur Dispergierbarkeit in Wasser ausreichend hydrophilen Form vorliegt. So ist es bekannt, dass beim langsamen Vermischen von flüssigen NCO-Präpolymeren mit Wasser rasch Kettenverlängerung und anschliessend Vernetzung unter Verquallung erfolgt, was die Herstellung brauchbarer Kunststoffdispersionen selbstverständlich unmöglich macht. Da der Lösungs-Vorgang unter Dispersionsbildung bei festen NCO-Gruppenfreien Präpolymeren gemäss der vorstehend genannten Veröffentlichungen verhältnismässig langsam abläuft, war auch zu erwarten, dass die freien Isocyanatgruppen der erfindungsgemässen Kunststoffvorläufer beim Versuch, den Feststoff in Wasser unter Bildung einer Dispersion zu lösen, so rasch mit dem Wasser abreagieren, dass infolge vorzeitiger Verlängerung bzw. Vernetzung die Bildung einer Kunststoffdispersion verhindert wird.

Gegenstand der vorliegenden Erfindung sind unterhalb 40°C feste, unterhalb ihres Erweichungspunktes in Wasser dispergierbare, Isocyanatgruppen sowie Urethan-, Harnstoff- und/oder Amidgruppen aufweisende Kunststoffvorläufer, gekennzeichnet durch:

a) ein Durchschnittsmolekulargewicht von 600 bis 10 000,

b) einen die Dispergierbarkeit in Wasser gewährleistenden Gehalt an chemisch eingebauten hydrophilen Gruppen bzw. potentiellen hydrophilen Gruppen in Form von (i) 4 bis 180 Milliäquivalenten pro 100 g ionischen Gruppen und/oder durch eine Neutralisationsreaktion in ionische Gruppen überführbare Gruppen und/oder (ii) 2 bis 20 Gew.-% innerhalb von Polyetherketten eingebauten Ethylenoxideinheiten $-CH_2-CH_2-O-$,

c) einen Isocyanatgehalt von 2 bis 11 Gew.-%, und

d) einen Gehalt an, in Form von Urethangruppen $-NH-CO-O-$, Harnstoffgruppen $-NH-CO-NH-$ und/oder Amidgruppen $-NH-CO-$ vorliegenden, $-NH-$Gruppen von 2 bis 10 Gew.-%.

Gegenstand der Erfindung ist auch ein Verfahren zur Herstellung von wässerigen Kunststoffdispersionen, dadurch gekennzeichnet, dass man, unterhalb 40°C feste, in Wasser dispergierbare, Isocyanatgruppen sowie Urethan-, Harnstoff- und/oder Amidgruppen aufweisende Kunststoffvorläufer, welche:

a) ein Durchschnittsmolekulargewicht von weniger als 20 000,

b) einen, die Dispergierbarkeit in Wasser gewährleistenden Gehalt an chemisch eingebauten hydrophilen Gruppen bzw. potentiellen hydrophilen Gruppen in Form von (i) 4 bis 180 Milliäquivalenten pro 100 g ionischen Gruppen und/oder durch eine Neutralisationsreaktion in ionische Gruppen überführbare Gruppen und/oder (ii) 2 bis 20 Gew.-% innerhalb von Polyetherketten eingebauten Ethylenoxideinheiten $-CH_2-CH_2-O-$,

c) einen Isocyanatgehalt von 0,2 bis 18 Gew.-%, und

d) einen Gehalt an, in Form von Urethangruppen $-NH-CO-O-$, Harnstoffgruppen $-NH-CO-NH-$ und/oder Amidgruppen $-NH-CO-$ vorliegenden, $-NH-$Gruppen von 1,3 bis 13 Gew.-% aufweisen, bei einer Temperatur unterhalb ihres Erweichungsbereiche in stückiger oder (grob)pulvriger Form in Wasser einträgt oder mit Wasser übergiesst, wobei man gegebenenfalls vorliegende, in ionische Gruppen überführbare Gruppen, gegebenenfalls vor, während oder nach dem Zusammenbringen mit Wasser zumindest teilweise durch eine Neutralisationsreaktion in ionische Gruppen überführt, und man die dispergierten Kunststoffvorläufer anschliessend mit Wasser oder anderen gegenüber Isocyanatgruppen reaktive Gruppen enthaltenden Kettenverlängerungs- oder Vernetzungsmitteln umsetzt, so dass eine stabile, lagerfähige wässerige Kunststoffdispersion erhalten wird.

Die Herstellung der erfindungsgemässen Kunststoffvorläufer erfolgt nach den an sich bekannten Methoden der Polyurethan-Chemie, d.h., durch Umsetzung von organischen Polyisocyanaten mit Verbindungen, welche gegenüber Isocyanatgruppen reaktionsfähige Gruppen aufweisen, sowie gegebenenfalls, insbesondere wenn die genannten Ausgangsmaterialien keine hydrophilen Gruppen bzw. in hydrophile Gruppen überführbare Gruppen aufweisen, unter Mitverwendung von derartige Gruppen aufweisenden Ausgangsmaterialien.

Geeignete Polyisocyanate sind alle beliebigen Polyisocyanate der Polyurethan-Chemie, wie sie beispielhaft in US-PS Nr. 3756992, Kolonne 6, Zeile 45 bis Kolonne 7, Zeile 19 beschrieben sind, vorzugsweise werden jedoch die in der Polyurethan-Chemie bevorzugten Diisocyanate wie z.B. 2,4- und/oder 2,6-Diisocyanattoluol, 4,4'-Diisocyanat-diphenylmethan, gegebenenfalls dessen Gemisch mit 2,4-Diisocyanat-diphenylmethan, 4,4'-Diisocyanat-dicyclohexylmethan, gegebenenfalls dessen Gemisch mit 2,4'-Diisocyanat-dicyclohexylmethan, Hexamethylendiisocyanat oder 1-Isocyanato-3,3,5-trimethyl-5-isocyanato-methylcyclohexan (=Isophoron-Diisocyanat, abgekürz: IPDI) eingesetzt. Die besonders bevorzugten Ausgangsisocyanate sind difunktionell, aliphatischer bzw. cycloaliphatischer Natur und weisen ein zwischen 168 und 300 liegendes Molekulargewicht auf.

Zur Herstellung der erfindungsgemässen Kunststoffvorläufer geeignete Verbindungen mit gegenüber Isocyanatgruppen reaktionsfähigen Gruppen sind die üblichen, in der Polyurethan-Chemie bekannten Carboxylgruppen, primäre und/oder sekundäre Aminogruppen und insbesondere alkoholische Hydroxylgruppen aufweisenden Aufbaukomponenten des Molekulargewichtsbereichs 32-2500, vorzugsweise 62-1000. Das Molekulargewicht der unter diese Definition fallenden höhermolekularen Aufbaukomponenten lässt sich bei bekannter Funktionalität aus ihrem Gehalt an funktionellen Gruppen und bei unbekannter Funktionalität (z.B. höherfunktionelle Polyesterpolyole) osmometrisch bestimmen. Die Verbindungen weisen im allgemeinen bis zu 8, vorzugsweise 2 oder 3 und insbesondere 2 gegenüber Isocyanatgruppen reaktionsfähige Gruppen der genannten Art auf. Geeignete derartige Aufbaukomponenten sind beispielsweise in US-PS Nr. 3756992, Kolonne 5, Zeile 17 bis Kolonne 6, Zeile 39, oder in US-PS Nr. 4123423, Kolonne 6, Zeile 23 bis Kolonne 8, Zeile 30 beschrieben. Besonders bevorzugte Ausgangsmaterialien mit gegenüber Isocyanatgruppen reaktionsfähigen Gruppen sind die entsprechenden Polyester- oder Polyetherpolyole eines Molekulargewichts zwischen 250 und 1000 sowie die entsprechenden niedermolekularen, gegebenenfalls Ether- oder Estergruppen aufweisenden aliphatischen Polyole des Molekulargewichtsbereichs 62-250.

Neben den in den zitierten Vorveröffentlichungen genannten, im Sinne der Isocyanat-Additionsreaktion mindestens difunktionellen Aufbaukomponenten können zur Herstellung der erfindungsgemässen Kunststoffvorläufer auch monofunktionelle Reaktionskomponenten eingesetzt werden, wodurch ein gegebenenfalls erwünschter Kettenabbruch erreicht werden kann. Derartige monofunktionelle Aufbaukomponenten sind insbesondere einfache aliphatische Alkohole des Molekulargewichtsbereichs 32-200, wie z.B. Methanol, Ethanol, n-Octanol oder n-Dodecanol bzw. auf solchen Alkoholen gestartete Polyether.

Wie bereits ausgeführt, werden als Aufbaukomponenten mit gegenüber Isocyanatgruppen reaktionsfähigen Gruppen vorzugsweise aliphatische Alkohole verwendet, die naturgemäss mit den Polyisocyanaten unter Bildung von Urethangruppen abreagieren. Demgegenüber ist der Einsatz von primären oder sekundären Polyaminen, die mit den Isocyanatgruppen unter Harnstoffbildung reagieren bzw. der Einsatz von Carbonsäuren, welche mit den Polyisocyanaten unter Ausbildung von Amidgruppen reagieren, weniger bevorzugt.

Da in den erfindungsgemässen Kunststoffvorläufern hydrophile Gruppen, d.h., insbesondere innerhalb von Polyetherketten angeordnete Ethylenoxideinheiten -$CH_2$-$CH_2$-O- oder ionische bzw. potentielle ionische Gruppen wie z.B. Ammoniumgruppen, tertiäre Aminogruppen, Carboxylatgruppen bzw. Carboxylgruppen und/oder Sulfonat- bzw. Sulfonsäuregruppen vorliegen müssen, werden bei der Herstellung der erfindungsgemässen Kunststoffvorläufer anstelle oder vorzugsweise zusätzlich zu den beispielhaft genannten Aufbaukomponenten Verbindungen (mit)verwendet, welche neben den genannten hydrophilen Gruppen Isocyanatgruppen oder gegenüber Isocyanatgruppen reaktionsfähige Gruppen aufweisen.

Die Einführung der ionischen Gruppen bzw. der in ionische Gruppen überführbare Gruppen in die erfindungsgemässen Kunststoffvorläufer geschieht in an sich bekannter Weise durch Mitverwendung von ionische Gruppen bzw. in ionische Gruppen überführbare Gruppen aufweisenden Verbindungen mit Isocyanatgruppen oder vorzugsweise mit gegenüber Isocyanatgruppen reaktionsfähigen Gruppen wie insbesondere alkoholischen Hydroxylgruppen. Derartige Verbindungen sind beispielsweise in US-PS Nr. 3756992, US-PS Nr. 3479310 oder US-PS Nr. 4108814 beschrieben. Falls die Einführung von freien Carboxylgruppen als potentielle anionische Gruppen erwünscht ist, empfiehlt sich die Mitverwendung von Verbindungen, die neben freien Carboxylgruppen gegenüber Isocyanatgruppen höherreaktive Gruppen, insbesondere Hydroxylgruppen aufweisen. Ein typisches Beispiel einer derartigen Aufbaukomponente ist die Dimethylolpropionsäure, die bei Raumtemperatur oder mässig erhöhter Temperatur mit organischen Polyisocyanaten selektiv unter ausschliesslicher Bildung von Urethangruppen und Beibehaltung der freien Carboxylgruppe abreagiert.

Die in den erfindungsgemässen Kunststoffvorläufern gegebenenfalls vorliegenden, innerhalb von Polyetherketten eingebauten Ethylenoxideinheiten werden vorzugsweise durch Mitverwendung von seitenständige oder endständige, Ethylenoxideinheiten enthaltenden Alkoholen und/oder durch Mitverwendung von derartigen Polyalkylen-Seitenketten aufweisenden Diisocyanaten bei der Herstellung der Kunststoffvorläufer eingeführt. Derartige, Ethylenoxideinheiten enthaltende Polyalkylenoxid-Ketten aufweisende Aufbaukomponenten sind beispielsweise in DE-OS Nr. 2314512, DE-OS Nr. 2651506, DE-OS Nr. 2314513, US-PS Nr, 3920598 oder US-PS Nr. 3905929 beschrieben.

Eine weitere Möglichkeit zur Einführung von Ethylenoxideinheiten besteht in der Mitverwendung von Polyetherpolyolen, welche eine entsprechende Anzahl solcher Einheiten aufweisen.

Die beispielhaft genannten hydrophilen bzw. potentiell hydrophilen Aufbaukomponenten werden bei der Herstellung der erfindungsgemässen Kunststoffvorläufer in solchen Mengen mitverwendet, dass die Dispergierbarkeit der Kunststoffvorläufer in Wasser gewährleistet ist. Hierzu können sowohl ionische bzw. potentiell ionische als auch nichtionisch hydrophile Gruppen der beispielhaft genannten Art als auch beide Arten an hydrophilen Gruppierungen gleichzeitig eingebaut werden. Der Gehalt der erfindungsgemässen Kunststoffvorläufer an den genannten hydrophilen Gruppierungen liegt innerhalb der obengenannten Bereiche und, bei der alleinigen Verwendung von ionischen Gruppen bzw. von in ionische Gruppen überführbaren Gruppen als hydrophile Gruppen vorzugsweise bei 30 bis 130 Milliäquivalenten/100 g an solchen Gruppen, bzw. bei der alleinigen Verwendung von innerhalb Polyetherketten eingebauten Ethylenoxideinheiten als hydrophile Gruppierungen vorzugsweise bei 8 bis 16 Gew.-% an innerhalb von Polyetherketten eingebauten Ethylenoxideinheiten. Falls beide Arten von hydrophilen Gruppen vorliegen, liegen in den Kunststoffvorläufern vorzugsweise 10 bis 40 Milliäquivalente/100 g an ionischen Gruppen oder an in ionische Gruppen überführbaren Gruppen und gleichzeitig 3 bis 8 Gew.-% an innerhalb von Polyetherketten eingebauten Polyethylenoxideinheiten vor.

Falls die Dispergierbarkeit der Kunststoffvorläufer teilweise oder ausschliesslich durch den Einbau von potentiellen ionischen Gruppen gewährleistet ist, muss selbstverständlich vor oder während des Dispergiervorgangs der Kunststoffvorläufer für eine zumindest teilweise Überführung der potentiellen ionischen Gruppen in ionische Gruppen Sorge getragen werden, so dass der Gehalt der dispergiert vorliegenden Kunststoffvorläufer an ionischen Gruppen den obengenannten Bedingungen entspricht. Derartige Kunststoffvorläufer, deren Dispergierbarkeit teilweise oder ausschliesslich durch die Anwesenheit von potentiellen ionischen Gruppen gewährleistet ist, sind, strenggenommen, selbstverständlich nicht in Wasser, sondern lediglich in ein entsprechendes Neutralisationsmittel enthaltendem Wasser dispergierbar. Die Einführung von quarternären Stickstoffatomen in die Kunststoffvorläufer erfolgt vorzugsweise entweder durch den Einbau von tert. Stickstoffatomen und deren anschliessende Quarternierung oder durch den Einbau von tert. Stickstoffatomen und deren Neutralisation vor oder während des Dispergiervorgangs.

Die Herstellung der erfindungsgemässen Kunststoffvorläufer erfolgt nach den bekannten Verfahren des Standes der Technik, wie sie beispielsweise in den US-Patenten Nrn. 3756992, 4094842 oder 4123423 gelehrt wird, jedoch mit dem ganz wesentlichen Unterschied, dass bei der Herstellung der erfindungsgemässen Kunststoffvorläufer stets mit überschüssigen Mengen an organischen Polyisocyanaten, bezogen auf alle gegenüber Isocyanatgruppen reaktionsfähigen Gruppen, gearbeitet wird. Bei der Herstellung der erfindungsgemässen Kunststoffvorläufer liegt das Äquivalentverhältnis zwischen Isocyanatgruppen und gegenüber Isocyanatgruppen reaktionsfähigen Gruppen im allgemeinen zwischen 1,2:1 und 2:1, so dass gewährleistet ist, dass die erfindungsgemässen Kunststoffvorläufer einen NCO-Gehalt von 2 bis 11 Gew.-% aufweisen.

Wesentlich bei der Herstellung der erfindungsgemässen Kunststoffvorläufer ist schliesslich auch, dass dieser bei Raumtemperatur, d.h. unterhalb 40°C, vorzugsweise unterhalb 50°C, als Feststoff vorliegt. Dies wird dadurch erreicht, dass man Art und Mengenverhältnisse der Aufbaukomponenten, insbesondere das mittlere Molekulargewicht und die Funktionalität der Polyisocyanatkomponente sowie das mittlere Molekulargewicht und die mittlere Funktionalität der gegenüber Isocyanatgruppen reaktionsfähigen Komponente so wählt, dass in den erfindungsgemässen Kunststoffvorläufern 2 bis 10 Gew.-% an -NH-Einheiten in Form von Harnstoffgruppierungen -NH-CO-NH-, Amidgruppierungen -NH-CO- und/oder insbesondere Urethangruppierungen -NH-CO-O vorliegen.

Ausserdem müssen die erfindungsgemässen Kunststoffvorläufer zwischen 600 und 10000, vorzugsweise zwischen 1000 und 6000 liegendes mittleres Molekulargewicht aufweisen. Auch dies wird auf einfache Weise durch geeignete Wahl des Molekulargewichts und der Funktionalität der Ausgangsmaterialien sowie durch geeignete Wahl des Äquivalentverhältnisses zwischen Isocyanatgruppen und gegenüber Isocyanatgruppen reaktionsfähigen Gruppen erreicht. Das Molekulargewicht der erfindungsgemässen Kunststoffvorläufer kann rechnerisch aus der Stöchiometrie der Umsetzung ermittelt werden. Setzt man beispielsweise 2 Mol einer Dihydroxyverbindung vom Molekulargewicht 2000, 1 Mol eines basischen Kettenverlängerungsmittels vom Molekulargewicht 119 und 3,75 Mol Diisocyanat (Molekulargewicht 168) zu einem Oligourethan mit 2 endständigen NCO-Gruppen um, so errechnet sich das Molekulargewicht zu

$$MG = \frac{2}{1,5}(2 \times 2000 + 119 + 3,75 \times 168) = 6300$$

wobei sich der Faktor 1,5 wie folgt ergibt: (Mole Diisocyanate − Mole an difunktioneller, NCO-reaktiver Komponente) ×2.

Die Herstellung der erfindungsgemässen Kunststoffvorläufer erfolgt im allgemeinen im Temperaturbereich zwischen 10 und 150°C, vorzugsweise 40 bis 120°C.

Die so erhaltenen erfindungsgemässen Kunststoffvorläufer sind unterhalb ihres Erweichungspunktes sehr leicht in Wasser dispergierbar, wobei zur Dispergierung eines basischen, d.h. tert. Aminogruppen aufweisenden Kunststoffvorläufers vorzugsweise zur Überführung der tert. Aminogruppen in Ammoniumgruppen eine wässerige Lösung mit einem unter 6 liegenden pH-Wert und zur Dispergierung eines saure Gruppen enthaltenden Kunststoffvorläufers eine wässerige Lösung mit einem oberhalb 8 liegenden pH-Wert eingesetzt wird. Geeignete wässerige Lösungen mit einem unter 6 bzw. über 8 liegenden pH-Wert sind insbesondere wässerige Lösungen von unter den Bedingungen des Dispergiervorgangs nicht mit den Isocyanatgruppen reagierenden anorganischen oder organischen Säuren wie z.B. Salzsäure, Schwefelsäure, Ameisensäure oder Oxalsäure bzw. Lösungen von unter den Bedingungen des Dispergiervorgangs nicht mit Isocyanatgruppen reagierenden Basen wie z.B. Natriumhydroxid, Kaliumhydroxid, Trimethylamin oder Triethylamin.

Bei der Dispergierung der erfindungsgemässen Kunststoffvorläufer müssen gegebenenfalls vorliegende potentielle ionische Gruppen nur dann zwingend in ionische Gruppen überführt werden, wenn keine sonstigen, die Dispergierbarkeit der Präpolymeren gewährleistenden Gruppen vorliegen. Es ist auf jeden Fall unvorteilhaft, eine maximale Menge an ionischen Gruppen mit einer maximalen Menge an Ethylenoxidgruppen zu kombinieren, da dann die Hydrophilie der Kunststoffvorläufer für die meisten Anwendungsgebiete zu hoch wäre.

Beim erfahrungsgemässen Verfahren zur Herstellung von wässerigen Kunststoffdispersionen werden die bereits oben in Zusammenhang mit dem erfindungsgemässen Verfahren definierten Kunststoffvorläufer eingesetzt, die unter Einhaltung eines Äquivalentverhältnisses zwischen Isocyanatgruppen und gegenüber Isocyanatgruppen reaktionsfähigen Gruppen von 1,05:1 und 3:1 hergestellt werden, wobei jedoch ein Äquivalentverhältnis von grösser als 2,1:1 nur bei (Mit)verwendung von höher als difunktionellen Polyisocyanaten in Betracht kommt. Bei den beim erfindungsgemässen Verfahren einzusetzenden Kunststoffvorläufern handelt es sich somit um die oben definierten erfindungsgemässen Kunststoffvorläufer oder um analoge Verbindungen, deren NCO- und NH-Gehalt innerhalb der obengenannten breiten Grenzen auch ausserhalb der entsprechenden Grenzen der erfindungsgemässen Kunststoffvorläufer liegen kann, und deren Durchschnittsmolekulargewicht unterhalb 20 000 liegt. Zur Herstellung der Dispersionen werden die Kunststoffvorläufer unterhalb ihres Erweichungspunkts in pulvriger, grobpulvriger oder stückiger Form in das wässerige Medium eingerührt bzw. mit diesem übergossen. Die Zerkleinerung der Kunststoffvorläufer kann beispielsweise mechanisch in einer Mühle erfolgen. Hierzu können Hilfsmittel mitverwendet werden, die die Sprödigkeit fördern, wie z.B. Trockeneis, oder die ein Verkleben der Feststoffstücke verhindern wie z.B. Silikonzusätze, Fettalkohole, Fettsäurederivate, Wachse oder Aerosile, soweit sie nicht mit Isocyanatgruppen reaktionsfähig sind. Es ist jedoch nicht erforderlich, die Kunststoffvorläufer zur Durchführung des erfindungsgemässen Verfahrens zu pulverisieren, da sie, wie gesagt, auch in grobstückiger Form spontan in Wasser dispergierbar sind. Wesentlich für eine einwandfreie Dispergierung der Kunststoffvorläufer ist vor allem, dass vor Ablauf des Dispergiervorgangs im wesentlichen noch keine zu Kettenverlängerung oder Vernetzung führende Isocyanat-Additionsreaktion stattfindet. Die hierzu erforderliche Stabilität der Isocyanatendgruppen gegenüber Wasser ist von mehreren Faktoren abhängig. Prinzipiell ist die Reaktivität der Isocyanatgruppe der Hydrophilie des NCO-Präpolymeren proportional, d.h. bei zwei bis auf die Hydrophilie identischen NCO-Präpolymeren werden die NCO-Gruppen des ·hydrophileren Systems schneller mit Wasser reagieren. Wie aber aus den Beispielen zu sehen ist, liegen sogar bei NCO-Präpolymeren mit über 8% $SO_3$-Gruppen auf Feststoff bezogen noch beachtliche Topfzeiten (diejenige Zeit, die zur vollständigen Reaktion der vorhandenen Isocyanatgruppen mit Wasser notwendig ist) vor.

Einen Einfluss auf die Topfzeit hat auch die Wahl der Isocyanatendgruppe. Es sind prinzipiell sowohl aromatisch wie aliphatisch oder cycloaliphatisch gebundene Isocyanatgruppen verwendbar, bevorzugt sind jedoch die aliphatisch und cycloaliphatisch gebunden Isocyanatgruppen und ganz besonders bevorzugt die letztgenannten.

Selbstverständlich können bei der Herstellung der Kunststoffvorläufer, d.h. der NCO-Präpolymeren, auch Isocyanatgemische, auch aus aliphatischen und aromatischen Isocyanaten, eingesetzt werden. Es ist durchaus möglich, das Oligourethan mit z.B. einem aromatischen Diisocyanat als OH-endständiges Präpolymer aufzubauen und anschliessend mit einem aliphatischen Diisocyanat zu einem NCO-endständigen Präpolymeren umsetzen.

Die Durchführung des erfindungsgemässen Verfahrens zur Herstellung von wässerigen Kunststoffdispersionen ist denkbar einfach. Man legt beispielsweise das zur Dispergierung benötigte Wasser vor und gibt hierzu unter leichtem Rühren das Präpolymer in stückiger Form, z.B. als Granulat oder auch in groben Stücken oder als grobes Pulver, zu. Man kann auch das Präpolymer in stückiger oder grobpulvriger Form vorlegen, mit der benötigten Menge Wasser übergiessen und zur rascheren Dispergierung umrühren. Das Gewichtsverhältnis Präpolymer zu Wasser liegt dabei im allgemeinen zwischen 65:35 und 5:95, vorzugsweise zwischen 55:45 und 20:80. Auf das Umrühren kann auch verzichtet werden. Der Dispergiervorgang benötigt grundsätzlich keinerlei Scherkräfte; die zur Dispergierung benötigte Zeit ist dann allerdings länger. Bei Abwesenheit eines Rühraggregats empfiehlt es sich, die Mischung hin und wieder zu bewegen oder für kurze Zeit von Hand durchzurühren.

Die Temperatur während des Dispergiervorgangs soll unterhalb des Erweichungspunktes des festen Präpolymeren liegen, so dass kein Verbakken des Präpolymeren zu grossen Klumpen erfolgt. Es ist jedoch durchaus möglich, gegen Ende des Dispergiervorgangs die Temperatur zu erhöhen, sofern es sich um ein ionische Gruppen enthaltendes Präpolymer handelt, um auf diese Weise den Lösevorgang zu beschleunigen.

Wesentlich ist für das erfindungsgemässe Verfahren, dass beim Dispergiervorgang stets das Wasser die kontinuierliche Phase ist. Nur so ist es in einfacher Weise möglich, den Feststoff unterhalb seines Erweichungspunktes zu einer Dispersion zu lösen. Der Erweichungspunkt lässt sich relativ genau durch eine thermomechanische Dehnungsanlage (TMDA) bestimmen, wobei die graphische Darstellung der Messergebnisse im Erweichungspunkt ein deutliches Abknicken der weitgehend gradlinigen Dehnungsspannungskurve zeigt. Mit dieser Methode lassen sich auch Erweichungsbereiche feststellen. Für die Untersuchung der Erweichungsbereiche ist die Differenzialthermoanalyse (DTA) geeigneter. (R. Bonart, L. Morbitzer und H. Rinke, „Kolloid-Z.u.Z. Polymere", *240*, 807 [1970]; H.U. Herwieg, *ibid.*, *211*, 34 [1966].)

Beim Lösen ist prinzipiell auch ein Rühren der Feststoffbrocken möglich, wobei stets das Wasser die kontinuierliche Phase darstellt.

Der Dispergiervorgang in Abhängigkeit vom Erweichungspunkt des Präpolymeren kann bei 1 bis 150°C, vorzugsweise bei 20 bis 70°C ganz besonders bevorzugt bei Raumtemperatur erfolgen. Er erfolgt generell unterhalb des Erweichungspunktes des Festkörpers.

Der Dispergiervorgang kann durch Emulgatoren unterstützt werden. Dies ist aber nicht notwendig. Er kann gegebenenfalls auch unter Zuhilfenahme geringer Mengen von Lösungsmitteln wie z.B. Aceton erfolgen.

Im Anschluss an die Dispergierung der Kunststoffvorläufer reagieren die vorliegenden Isocyanatgruppen selbstverständlich mit dem Wasser unter Kettenverlängerung ab. Diese Kettenverlängerungsreaktion kann gegebenenfalls durch eine Temperaturerhöhung der Dispersion des Kunststoffvorläufers beschleunigt werden. Besonders bevorzugt erfolgt die Kettenverlängerung jedoch nach erfolgter Dispergierung der Kunststoffvorläufer mittels eines Kettenverlängerungsmittels, welches in Wasser löslich ist und welches gegenüber Isocyanatgruppen eine höhere Reaktionsbereitschaft als Wasser aufweist. Derartige Kettenverlängerungsmittel sind insbesondere wasserlösliche Diamine mit 2 gegenüber Isocyanatgruppen reaktionsfähigen Gruppen wie z.B. Ethylendiamin, Hexamethylendiamin oder 1-Amino-3,3,5-trimethyl-5-aminomethyl-cyclohexan (IPDA). Auch Hydrazin, beispielsweise in Form von Hydrazinhydrat, kann als Kettenverlängerungsmittel eingesetzt werden. Grundsätzlich ist auch, zwecks gegebenenfalls erwünschter Verzweigung der dispergierten Kunststoffe, die Verwendung von wasserlöslichen, höherfunktionellen Polyaminen wie z.B. von Diethylentriamin denkbar. Die Kettenverlängerungsmittel werden vorzugsweise nach dem Dispergiervorgang zugefügt, um sicherzustellen, dass die spontan ablaufende Additionsreaktion zwischen den Isocyanatgruppen und den gegenüber Isocyanatgruppen reaktionsfähigen Gruppen des Kettenverlängerungsmittels den Dispergiervorgang nicht be- oder verhindert. Die Kettenverlängerungsmittel werden vorzugsweise in solchen Mengen zugesetzt, dass das Äquivalentverhältnis zwischen Isocyanatgruppen und gegenüber Isocyanatgruppen reaktionsfähigen Gruppen des Kettenverlängerungsmittels zwischen 1:1 und 3:1, vorzugsweise zwischen 1,1:1 und 1,5:1 liegt. Diese Kettenverlängerungsreaktion der dispergierten Kunststoffvorläufer erfolgt vorzugsweise bei Raumtemperatur.

Grundsätzlich ist es selbstverständlich auch möglich, in die erfindungsgemässen Kunststoffvorläufer durch Mitverwendung geeigneter Aufbaukomponenten reaktive Zentren, wie z.B. in Analogie zu US-PS Nr. 4123423 reaktive Zentren, insbesondere olefinische Verbindungen, einzubauen, so dass letztendlich durch UV-Licht vernetzbare, in Wasser dispergierte Kunststoffe vorliegen.

Den erfindungsgemäss erhältlichen Kunststoffdispersionen können auch die üblichen Vernetzungsmittel wie z.B. Malaminharze oder Formaldehyd oder andere Hilfs- und Zusatzmittel wie z.B. die üblichen Verdickungsmittel oder Füllstoffe zugesetzt werden.

Den nach dem erfindungsgemässen Verfahren erhaltenen Kunststoffdispersionen, d.h. vor allem Polyurethan-Harnstoff-Dispersionen stehen die verschiedensten Anwendungsgebiete offen. Sie lassen sich z.B. für die Lederzurichtung einsetzen und können für die Beschichtung der unterschiedlichsten Materialien, u.a. auch für die Textilbeschichtung, verwandt werden. Hier können sie z.B. als Deckstrich Anwendung finden. Bedeutende Anwendungsgebiete stellen ferner die Verwendung als Klebstoff oder als Lack dar. Weitere Verwendungsmöglichkeiten liegen z.B. auf den Gebieten Glasfaserschlichte, Dispergierhilfsmittel, Imprägnierungen von Faser und Textilien vor. Auch sind diese Produkte als Zusatz zu Kunststoffdispersionen anzusehen oder als Bindemittel für z.B. Kork- oder Holzmehl, Glasfasern, Asbest, papierartige Materialien, Plastik- oder Gummiabfälle und keramische Materialien.

Die erfindungsgemässen Kunststoffvorläufer eignen sich auch hervorragend als wasserdispergierbare Vernetzungsmittel für wässerige Polyurethan- und Polymerisatdispersionen, soweit diese gegenüber Isocyanatgruppen reaktionsfähige Zentren aufweisen. Für dieses Anwendungsgebiet der erfindungsgemässen Kunststoffvorläufer erfolgt die Dispergierung derselben in völliger Analogie zur oben beschriebenen Dispergierung in Wasser in den zu vernetzenden Primärdispersionen.

In den nachfolgenden Beispielen beziehen sich alle Prozentangaben auf Gewichtsprozente. Die angegebenen mittleren Molekulargewichte der beschriebenen Kunststoffvorläufer wurden rechnerisch aus der Stöchiometrie der Ausgangsmaterialien ermittelt. Die zur Dispergierung gelangenden Granulate wurden durch Zerschlagen der erstarrten Schmelzen mit dem Hammer hergestellt und weisen, dieser Methode entsprechend, einen stark unterschiedlichen Teilchendurchmesser auf.

*Beispiel 1:*

*Ansatz*

245,7 g propoxyliertes Adukt aus 2-Butendiol-1,4 und $NaHSO_3$ (Molekulargewicht 430) 70%ig in Toluol
177,6 g Isophorondiisocyanat (IPDI)

*Durchführung*

Das Adukt wird eine Stunde im Vakuum unter Rühren bei 110°C von Toluol befreit und auf 100°C abgekühlt. Anschliessend wird das IPDI zugegeben und bei 100°C verrührt, bis ein konstanter NCO-Wert gefunden wird (ca. 8 h, $NCO_{const.}$: 9,4%). Die Schmelze wird auf eine mit Teflon ausgekleidete Metallwanne ausgegossen. Bei 110°C liegt eine Schmelze vor. Das Produkt kann mit einem Hammer oder in einer Mühle zerkleinert werden.

Mittleres Molekulargewicht: 874;
Erweichungspunkt: 88-90°C;
$SO_3^-$-Gehalt: 114,4 Milliäquivalente/100 g;
-NH-Gehalt (Urethan): 3,4 Gew.-%.

Das granulierte Produkt kann in Wasser bei Raumtemperatur mit einem einfachen Propellerrührer dispergiert werden. Nachdem der Feststoff gelöst ist, dauert es etwa 4 h, bis der NCO-Wert auf 0% gefallen ist.

Verlängert man nach dem Dispergieren in Wasser das NCO-gruppenhaltige Oligourethan mit IPDA unter Anwendung eines Äquivalentverhältnisses $NCO:NH_2$ von 1,2:1, so erhält man ebenfalls eine feinteilige Dispersion, die bei einem Feststoffgehalt von 17,1% eine Fordbecherviskosität (4-mm-Düse) von 11,1 s aufweist. Der pH-Wert beträgt 7.

*Beispiel 2:*

Analog Beispiel 1, aber an Stelle von IPDI wird die äquimolare Menge Hexamethylendiisocyanat (134,4 g) eingesetzt. Der NCO-Gehalt beträgt 8,4.

Mittleres Molekulargewicht: 766;
Erweichungspunkt: 80-82°C;
$SO_3^-$-Gehalt: 130,6 Milliäquivalente/100 g;
-NH-Gehalt (Urethan): 3,9 Gew.-%.

Das granulierte Produkt kann in Wasser bei Raumtemperatur mit einem einfachen Propellerrührer dispergiert werden. Nachdem der Feststoff gelöst ist, dauert es etwa 1 h, bis der NCO-Wert auf 0% gefallen ist.

Verlängert man nach dem Dispergieren in Wasser das NCO-gruppenhaltige Oligourethan mit IPDA wie in Beispiel 1 beschrieben, dann erhält man eine feinteilige Dispersion, die bei einem Feststoff von 27,7% eine Viskosität 200 mPa·s aufweist. Der pH-Wert beträgt 7.

*Beispiel 3:*

*Ansatz*

285,0 g eines auf Bisphenol A gestarteten Polypropylenoxidethers (OHZ 197)

113,6 g propoxyliertes Addukt aus 2-Buten-diol-1,4 und $NaHSO_3^-$ (Molekulargewicht 430) 70%ig in Toluol

228,1 g Isophorondiisocyanat (IPDI)

*Durchführung*

Der Polyether und das Addukt werden unter Rühren im Vakuum bei 110°C 1 h entwässert und vom Toluol befreit und anschliessend auf 90°C abgekühlt. Es wird IPDI zugegeben und gerührt bis zu einem konstanten NCO-Wert (4,49%). Anschliessend wird die Schmelze ausgegossen und nach dem Abkühlen auf Raumtemperatur zerkleinert.

Mittleres Molekulargewicht: 1730;
Erweichungspunkt: 79-80°C;
$SO_3^-$-Gehalt: 31,2 Milliäquivalente/100g;
-NH-Gehalt (Urethan): 3,5 Gew.-%.

Das granulierte Produkt kann in Wasser bei Raumtemperatur in 30 min mit einem einfachen Propellerrührer dispergiert werden. Nachdem der Feststoff gelöst ist, dauert es etwa 22 h, bis der NCO-Wert auf 0% gefallen ist. Die vorliegende 22,5%ige Dispersion hat eine Fordbecherviskosität (4-mm-Düse) von 11,4 s. Die Dispersion ist zentrifugenstabil. Der pH-Wert beträgt 7.

Verlängert man nach dem Dispergieren in Wasser das NCO-gruppenhaltige Oligourethan mit einer wässerigen IPDA-Lösung wie in Beispiel 1 beschrieben, so erhält man eine 12,5%ige Dispersion mit einer Fordbecherviskosität von 10,6 s (4-mm-Düse) und einem pH-Wert von 7,5.

*Beispeil 4:*

*Ansatz*

285,0 g eines auf Bisphenol A gestarteten Polypropylenoxidethers (OHZ 197)

125,9 g propoxyliertes Addukt aus 2-Butendiol-1,4 und $NaHSO_3$ (Molekulargewicht 430) 70%ig in Toluol

272,7 g eines perhydrierten 4,4'- bzw. 2,4'-Diphenylmethandiisocyanat-Isomeren-Gemisches (95:5 Gew.-%)

*Durchführung* (vgl. Beispiel 3)

Der erhaltene Feststoff hat einen NCO-Gehalt von 4,0%, ein mittleres Molekulargewicht von 1820 und einen Erweichungsbereich von 70-72°C. Der $SO_3^-$-Gehalt des Feststoffes beträgt 31,7 Milliäquivalente/100 g. Der Gehalt an -NH-Gruppen (Urethan) liegt bei 3,27 Gew.-%.

Das Granulat kann in Wasser bei Raumtemperatur in 30 min auf einem Magnetrührer dispergiert werden. Nachdem der Feststoff gelöst ist, dauert es etwa 23 h, bis der NCO-Wert auf 0% gefallen ist. Die vorliegende 15%ige Dispersion hat eine Fordbecherviskosität (4-mm-Düse) von 11,3 s. Der pH-Wert beträgt 7.

Verlängert man nach dem Dispergieren in Wasser das NCO-gruppenhaltige Oligourethan mit einer wässerigen IPDA-Lösung wie in Beispiel 1 beschrieben, so erhält man eine 12%ige Dispersion mit einer Fordbecherviskosität (4-mm-Düse) von 11,1 s und einem pH-Wert von 7.

*Beispiel 5:*

*Ansatz*

510,0 g Phthalsäure-ethylenglykol-polyester (OHZ 288)

227,4 g Phthalsäure-adipinsäure-ethylenglykol-polyester (OHZ 64)

127,2 g auf Butanol gestarteter Polyethylenoxid-polypropylenoxid-polyether (OHZ 26; 78,3 Gew.-% Ethylenoxid)

159,0 g propoxyliertes Addukt aus 2-Butendiol-1,4 und $NaHSO_3$ (Molekulargewicht 430) 70%ig in Toluol

341,4 g eines perhydrierten 4,4'- bzw. 2,4'-Diphenylmethandiisocyanat-Isomeren-Gemisches (95:5 Gew.-%)

218,9 g Hexamethylendiisocyanat

*Durchführung* (vgl. Beispiel 3)

Der erhaltene Feststoff hat einen NCO-Gehalt von 4,72%. Das durchschnittliche Molekularge-wicht beträgt 1840. Der $SO_3^-$-Gehalt liegt bei 17,5 Milliäquivalenten/100 g Feststoff. Der Ethyl-enoxidgehalt (innerhalb der eingebauten Poly-etherkette) beträgt 6,4%. Der Erweichungsbereich liegt bei 45-50°C. Der Gehalt an -NH-Gruppen (Urethan) liegt bei 3,4 Gew.-%.

Das Granulat kann in Wasser unter Rühren in 3 h bei Raumtemperatur dispergiert werden. Nachdem der Feststoff gelöst ist, dauert es etwa 170 h, bis der NCO-Wert auf 0% gefallen ist. Die vorliegende 20%ige Dispersion hat eine Fordbecherviskosität (4-mm-Düse) von 13,1 s. Der pH-Wert beträgt 7.

Verlängert man nach dem Dispergieren in Wasser das NCO-gruppenhaltige Oligourethan mit Diethylentriamin in einem $NCO/NH_2$-Äquivalent-verhältnis von 1,2:1 (ca. 60%ig in Wasser), so entsteht eine 20%ige Dispersion mit einer Fordbecherviskosität von 12,9 s und einem pH-Wert von 7. Im durchscheinenden Licht zeigt die Dispersion einen Tyndall-Effekt.

*Beispiel 6:*

Wenn man zu einer Dispersion, wie sie in der DE-OS Nr. 2446440 (US-PS Nr. 4108814), Beispiel 6, beschrieben ist, 200 ml 30%igen wässerigen Formaldehyd gibt und aus dieser Dispersion Filme zieht, die 20 min bei 150°C getrocknet werden, so findet man folgende physikalische Werte:

Reissfestigkeit 6,6 MPa
Bruchdehnung 440%

Fügt man zu dieser Dispersion 5 Gew.-% (bezogen auf Feststoff) des Feststoffes aus Beispiel 1 und löst diesen Feststoff in der vorliegenden Dispersion und zieht dann unter den oben beschriebenen Bedingungen Filme, so findet man folgende physikalische Werte:

Reissfestigkeit 18,3 MPa
Bruchdehnung 560%

*Beispiel 7:*

*Ansatz*

319,0 g eines auf Bisphenol A gestarteten Polypropylenoxidethers (OHZ 197)

276,5 g propoxyliertes Addukt aus 2-Butendiol-1,4 und $NaHSO_3$ (Molekulargewicht 430) 70%ig in Toluol

32,0 g Polydimethylsiloxan mit 2 endständigen $-CH_2-OH$-Gruppen und einem Hydroxylgehalt von 3 Gew.-%

20,1 g Trimethylolpropan

318,7 g Hexamethylendiisocyanat

*Durchführung* (vgl. Beispiel 3)

Der erhaltene Feststoff weist einen NCO-Gehalt von 5,49%, ein mittleres Molekulargewicht von 1251 und einen Erweichungsbereich von 70-75°C auf. Der $SO_3^-$-Gehalt des Feststoffes beträgt 50,9 Milliäquivalente/100 g. Der Gehalt an -NH-Gruppen (Urethan) liegt bei 4,3 Gew.-%.

Das Granulat kann in Wasser bei Raumtemperatur in 60 min auf einem Magnetrührer dispergiert werden. Nachdem der Feststoff gelöst ist, dauert es etwa 8 h, bis der NCO-Wert auf 0% gefallen ist. Die vorliegende 30%ige Dispersion hat eine Fordbecherviskosität (4-mm-Düse) von 15,1 s und einen pH-Wert von 5,5.

Verlängert man nach dem Dispergieren in Wasser das NCO-gruppenhaltige Oligourethan wie in Beispiel 5 beschrieben mit Diethylentriamin (ca. 60%ig in Wasser), so entsteht eine 20%ige Dispersion, welche eine Fordbecherviskosität von 15,8 s und einen pH-Wert von 7,5 aufweist.

*Beispiel 8:*

*Ansatz*

351,5 g Phthalsäure-ethylenglycol-polyester (OHZ 287)

258,0 g propoxyliertes Addukt von 2-Butendiol-1,4 und $NaHSO_3$ (Molekulargewicht 430) 70%ig in Toluol

310,8 g Hexamethylendiisocyanat

*Durchführung* (vgl. Beispiel 3)

Der erhaltene Feststoff weist einen NCO-Gehalt von 4,78%, ein mittleres Molekulargewicht von 1600 und einen Erweichungsbereich von 68-70°C auf. Der $SO_3^-$-Gehalt des Feststoffes beträgt 49,8 Milliäquivalente/100 g. Der Gehalt an -NH-Gruppen (Urethan) liegt bei 4,7 Gew.-%.

Das Granulat kann in Wasser bei Raumtemperatur in 30 min auf einem Magnetrührer dispergiert werden. Nachdem der Feststoff gelöst ist, dauert es etwa 2,5 h, bis der NCO-Wert auf 0% gefallen ist. Die vorliegende 30%ige (20%ige) Dispersion hat eine Viskosität von 200 mPa·s (30 mPa·s). Der pH-Wert beträgt 6,5.

Verlängert man nach dem Dispergieren in Wasser das NCO-gruppenhaltige Oligourethan mit Diethylentriamin (40%ig in Wasser) wie in Beispiel 5 beschrieben, so erhält man eine 30%ige Dispersion mit einer Viskosität von 200 mPa·s und einem pH-Wert von 8,0.

*Beispiel 9:*

*Ansatz*

560,7 g Phthalsäure-ethylenglykol-polyester (OHZ 287)

127,2 g auf Butanol gestarteter Polyethylenoxid-polypropylenoxid-polyether (OHZ 26; 78,3 Gew.-% Ethylenoxid)

159,0 propoxyliertes Addukt aus 2-Butendiol-1,4 und $NaHSO_3$ (Molekulargewicht 430) 70%ig in Toluol

719,2 g eines Isomeren-Gemisches von perhydriertem Methyldiphenylmethan-diisocyanat

*Durchführung* (vgl. Beispiel 3)

Der erhaltene Feststoff hat einen NCO-Gehalt von 4,8%, ein mittleres Molekulargewicht von 1815 und einen Erweichungsbereich von 68-70°C. Der Gehalt an -NH-Gruppen (Urethan) liegt bei 3,4%. Der $SO_3^-$-Gehalt des Feststoffes beträgt 17 Milliäquivalente/100 g. Der Ethylenoxidgehalt (innerhalb der eingebauten Polyetherkette) liegt bei 6,56%.

Das Granulat kann in Wasser unter Rühren in 3,5 h dispergiert werden. Nachdem der Feststoff gelöst ist, dauert es etwa 96 h, bis der NCO-Wert auf 0% gefallen ist. Die vorliegende 20%ige Dispersion hat eine Fordbecherviskosität (4-mm-Düse) von 11,1 s. Der pH-Wert beträgt 7.

Verlängert man nach dem Dispergieren in Wasser das NCO-gruppenhaltige Oligourethan wie in Beispiel 5 beschrieben mit Triethylentetramin (ca. 50%ig in Wasser), so hat eine 20%ige Dispersion eine Fordbecherviskosität (4-mm-Düse) von 10,6 s und einen pH-Wert von 9.

**Patentansprüche**

1. Unterhalb 40°C feste, unterhalb ihres Erweichungspunktes in Wasser dispergierbare Isocyanatgruppen sowie Urethan-, Harnstoff- und/oder Amidgruppen aufweisende Kunststoffvorläufer, gekennzeichnet durch:

a) ein Durchschnittsmolekulargewicht von 600 bis 10 000,

b) einen die Dispergierbarkeit in Wasser gewährleistenden Gehalt an chemisch eingebauten hydrophilen Gruppen bzw. potentiellen hydrophilen Gruppen in Form von (i) 4 bis 180 Milliäquivalenten pro 100 g ionischen Gruppen und/oder durch eine Neutralisationsreaktion in ionische Gruppen überführbare Gruppen und/oder (ii) 2 bis 20 Gew.-% innerhalb von Polyetherketten eingebauten Ethylenoxideinheiten -CH₂-CH₂-O-,

c) einen Isocyanatgehalt von 2 bis 11 Gew.-%, und

d) einen Gehalt an, in Form von Urethangruppen -NH-CO-O-, Harnstoffgruppen -NH-CO-NH- und/oder Amidgruppen -NH-CO-vorliegenden, -NH-Gruppen von 2 bis 10 Gew.-%.

2. Verfahren zur Herstellung von wässerigen Kunststoffdispersionen, dadurch gekennzeichnet, dass man unterhalb 40° C feste, in Wasser dispergierbare Isocyanatgruppen sowie Urethan-, Harnstoff- und/oder Amidgruppen aufweisende Kunststoffvorläufer, welche:

a) ein Durchschnittsmolekulargewicht von weniger als 20 000,

b) einen die Dispergierbarkeit in Wasser gewährleistenden Gehalt an chemisch eingebauten hydrophilen Gruppen bzw. potentiellen hydrophilen Gruppen in Form von (i) 4 bis 180 Milliäquivalenten pro 100 g ionischen Gruppen und/oder durch eine Neutralisationsreaktion in ionische Gruppen überführbare Gruppen und/oder (ii) 2 bis 20 Gew.-% innerhalb von Polyetherketten eingebauten Ethylenoxideinheiten -CH₂-CH₂-O-,

c) einen Isocyanatgehalt von 0,2 bis 18 Gew.-%, und

d) einen Gehalt an, in Form von Urethangruppen -NH-CO-O-, Harnstoffgruppen -NH-CO-NH- und/oder Amidgruppen -NH-CO-vorliegenden, -NH-Gruppen von 1,3 bis 13 Gew.-% aufweisen,

bei einer Temperatur unterhalb ihres Erweichungsbereichs in stückiger oder (grob)pulvriger Form in Wasser einträgt oder mit Wasser übergiesst,

wobei man gegebenenfalls vorliegende, in ionische Gruppen überführbare Gruppen, gegebenenfalls vor, während oder nach dem Zusammenbringen mit Wasser zumindest teilweise durch eine Neutralisationsreaktion in ionische Gruppen überführt, und

man die dispergierten Kunststoffvorläufer anschliessend mit Wasser oder anderen gegenüber Isocyanatgruppen reaktive Gruppen enthaltenden Kettenverlängerungs- oder Vernetzungsmitteln umsetzt, so dass eine stabile, lagerfähige, wässerige Kunststoffdispersion erhalten wird.

## Claims

1. Plastics precursors which contain isocyanate groups and urethane, urea and/or amide groups and are solid at temperatures below 40°C and dispersible in water at temperatures below their softening points, characterized by

a) an average molecular weight of 600 to 10,000,

b) a content of chemically incorporated hydrophilic groups or potential hydrophilic groups guaranteeing dispersibility in water in the form of (i) 4 to 180 milliequivalents per 100 g of ionic groups and/or groups convertible into ionic groups by a neutralisation reaction and/or (ii) 2 to 20 per cent by weight of ethylene oxide units -CH₂-CH₂-O- incorporated in polyether chains,

c) an isocyanate content of 2 to 11 per cent by weight, and

d) a content of 2 to 10 per cent by weight of -NH-groups in the form of urethane groups -NH-CO-O-, urea groups -NH-CO-NH- and/or amide groups -NH-CO-.

2. Process for the production of aqueous plastics dispersions, characterized in that water-dispersible plastics precursors which contain isocyanate groups and urethane, urea and/or amide groups, are solid at temperatures below 40° C and have

a) an average molecular weight of less than 20,000,

b) a content of chemically incorporated hydrophilic groups or potential hydrophilic groups guaranteeing dispersibility in water in the form of (i) 4 to 180 milliequivalents per 100 g of ionic groups and/or groups convertible into ionic groups by a neutralisation reaction and/or (ii) 2 to 20 per cent by weight of ethylene oxide units -CH₂-CH₂-O- incorporated in polyether chains,

c) an isocyanate content of 0.2 to 18 per cent by weight and

d) a content of 1.3 to 13 per cent by weight of -NH-groups in the form of urethane groups -NH-CO-O-, urea groups -NH-CO-NH- and/or amide groups -NH-CO-, are introduced into water or covered by pouring with water in the form of lumps or (coarse) powders at a temperature below their softening range, any groups convertible into ionic groups which may be present being converted at least partly into ionic groups by a neutralisation reaction carried out, as appropriate, before, during or after the contact with water, and the dispersed plastics precursors are then reacted with water or other chain-extending or cross-linking agents containing isocyanate reactive groups, so that a stable, storable aqueous plastics dispersion is obtained.

## Revendications

1. Précurseurs de matières plastiques solides au-dessous de 40° C, dispersibles dans de l'eau au-dessous de leur point de ramollissement et présentant des groupes isocyanate, de même que des groupes uréthanne, urée et/ou amide, caractérisés par

a) un poids moléculaire moyen de 600 à 10 000,

b) une teneur, assurant la dispersibilité dans l'eau, en groupes hydrophiles ou groupes hydrophiles potentiels chimiquement incorporés, sous forme de (i) 4 à 180 milliéquivalents par 100 g de groupes ioniques et/ou de groupes convertibles en groupes ioniques par une réaction de neutralisation, et/ou (ii) 2 à 20% en poids d'unités oxyde d'éthylène -CH₂-CH₂-O- incorporés à l'intérieur des chaînes polyéther,

c) une teneur en isocyanate de 2 à 11% en poids, et

d) une teneur en groupes NH, se présentant sous forme de groupes uréthanne -NH-CO-O-, de groupes urée -NH-CO-NH- et/ou de groupes amide -NH-CO-, de 2 à 10% en poids.

2. Procédé de fabrication de dispersions aqueuses de matières plastiques, caractérisé en ce qu'on introduit dans de l'eau, ou recouvre d'eau, des précurseurs de matières plastiques solides au-dessous de 40°C, dispersibles dans l'eau et comportant des groupes isocyanate de même que des groupes uréthanne, urée et/ou amide, et qui présentent:

a) un poids moléculaire moyen inférieur à 20 000,

b) une teneur, assurant la dispersibilité dans l'eau, en groupes hydrophiles ou groupes hydrophiles potentiels chimiquement incorporés, sous forme de (i) 4 à 180 milliéquivalents par 100 g de groupes ioniques et/ou de groupes convertibles par une réaction de neutralisation en des groupes ioniques, et/ou (ii) 2 à 20% en poids d'unités oxyde d'éthylène -CH₂-CH₂-O- incorporés à l'intérieur des chaînes polyéther,

c) une teneur en isocyanate de 0,2 à 18% en poids, et

d) une teneur en groupes NH, se présentant sous forme de groupes uréthanne -NH-CO-O-, de groupes urée -NH-CO-NH- et/ou de groupes amide -NH-CO-, de 1,3 à 13% en poids, à une température inférieure à leur intervalle de ramollissement sous une forme en morceaux ou en poudre (grossière), en ce qu'on convertit tout au moins partiellement les groupes éventuellement présents convertibles en groupes ioniques, le cas échéant avant, pendant ou après la réunion avec l'eau, par une réaction de neutralisation en groupes ioniques, et en ce qu'on fait réagir ensuite les précurseurs de matières plastiques dispersés avec de l'eau ou d'autres agents d'allongement de chaîne ou de réticulation contenant des groupes réactifs envers les groupes isocyanate, en sorte d'obtenir une dispersion aqueuse de matière plastique stable et se prêtant à l'entreposage.